# EUROPEAN PATENT SPECIFICATION

(11) **EP 3 430 913 B1**
(45) Date of publication and mention of the grant of the patent: **02.12.2020**
(21) Application number: 17382479.8
(22) Date of filing: 20.07.2017
(51) Int. Cl.: A23L 5/20, A23K 10/37, A23K 20/10, A23K 20/28, A23K 50/30, A23K 50/60

(54) **COMPOSITION FOR BINDING MYCOTOXINS AND ITS USE**
ZUSAMMENSETZUNG ZUM BINDEN VON MYKOTOXINEN UND VERWENDUNG DAVON
COMPOSITION PERMETTANT DE LIER DES MYCOTOXINES ET SON UTILISATION

(43) Date of publication of application: 23.01.2019
(73) Proprietor: Tolsa, S.A., 28031 Madrid (ES)
(72) Inventor: MARTIN RODADO, Sara, 28031 MADRID (ES); DE JUAN GARCIA, Francisco, 28031 MADRID (ES); MARTINEZ DEL OLMO, Diego, 28031 MADRID (ES)
(74) Representative: Ungria López, Javier

(56) References cited:
- CN-A- 104 313 381
- JAYNES ET AL: "Aflatoxin B"1 adsorption by clays from water and corn meal", APPLIED CLAY SCI, ELSEVIER, AMSTERDAM, NL, vol. 36, no. 1-3, 16 March 2007 (2007-03-16), pages 197-205, XP005932590, ISSN: 0169-1317, DOI: 10.1016/J.CLAY.2006.06.012
- William F Jaynes ET AL: "Influence of Soluble Feed Proteins and Clay Additive Charge Density on Aflatoxin Binding in Ingested Feeds", Toxins, 1 June 2011 (2011-06-01), pages 551-565, XP55428027, Switzerland DOI: 10.3390/toxins3060551 Retrieved from the Internet: URL:http://cdn.intechopen.com/pdfs/20403/I nTech-Influence_of_soluble_feed_proteins_a nd_clay_additive_charge_density_on_aflatox in_binding_in_ingested_feeds.pdf [retrieved on 2017-11-23]
- THOMAS DE MIL ET AL: "Characterization of 27 Mycotoxin Binders and the Relation with in Vitro Zearalenone Adsorption at a Single Concentration", TOXINS, vol. 7, no. 1, 5 January 2015 (2015-01-05) , pages 21-33, XP55428014, DOI: 10.3390/toxins7010021
- I S Shehata ET AL: "Adsorption of Ochratoxin A, Deoxynivalenol Zearalenone in vitro at different pH and adsorbents", , 1 January 2000 (2000-01-01), pages 136-140, XP55428698, Retrieved from the Internet: URL:https://link.springer.com/content/pdf/ 10.1007/BF02943002.pdf [retrieved on 2017-11-24]
- WILLIAM F. JAYNES ET AL: "Aflatoxin Toxicity Reduction in Feed by Enhanced Binding to Surface-Modified Clay Additives", TOXINS, vol. 3, no. 12, 10 June 2011 (2011-06-10), pages 551-565, XP055254457, DOI: 10.3390/toxins3060551
- S. CAVRET ET AL: "Assessment of deoxynivalenol (DON) adsorbents and characterisation of their efficacy using complementary in vitro tests", FOOD ADDITIVES & CONTAMINANTS: PART A, vol. 27, no. 1, 1 January 2010 (2010-01-01), pages 43-53, XP55428210, ISSN: 1944-0049, DOI: 10.1080/02652030903013252

## Description

### Technical field of the invention

The object of the present invention falls under the agri-food sector. More particularly, it relates to a new compound with mycotoxin-adsorbent properties. Another object of the invention is the use of said compound as a raw material in the formulation of compound feed, as an additive in finished mixtures intended for direct consumption by the animal or as an ingredient in the formulation of complex mycotoxin-adsorbent additives. The present invention relates to treatment and/or prevention of mycotoxicosis caused by fumonisin, zearalenone, ochratoxin, T-2 toxin or deoxynivalenol.

### Background of the invention

Mycotoxins are toxic secondary metabolites produced by organisms of the Fungi Kingdom by means of metabolic processes.

Currently, more than 400 mycotoxins are known, which are differentiated by their chemical and biological structure and by their toxicological properties. Most of them are highly dangerous and can cause diseases called mycotoxicosis, affecting animals' health even in very low concentrations (Kabak, B., et al., 2006, Critical Reviews in Food Science and Nutrition 46(8), 593-619). The most relevant are aflatoxins, fumonisins, zearalenone, trichothecenes, ochratoxins and ergot alkaloids.

From among all the existing mycotoxins, one of the most toxic is deoxynivalenol (DON) or vomitoxin, belonging to the trichothecene family. These toxins are produced by fungi of the genus Fusarium (*F. graminearum* and *F. sporotrichoides*). The high contamination of raw materials and feed by DON is one of the main problems that affect animal production worldwide. The dangerousness of this mycotoxin lies in the difficulty of sequestering it and the strong impact it has on the affected animal. In general, DON causes vomiting, diarrhoea, irritation, haemorrhaging and necrosis in the digestive tract, in addition to causing refusal of feed. DON affects all animal species, particularly pig and cattle, causing adverse effects on the target organ (liver) and small intestine. In ruminants, miscarriages, vomiting and diarrhoea, loss of appetite and low milk production is observed, in addition to reproductive and immunosuppressive problems. In meat-producing ruminants, decreased growth and lower weight of the animals is observed. Pigs are the most sensitive to DON. Decreased growth and productivity, a lower conception rate, a lower number of live-born piglets and a smaller volume and concentration of sperm has been observed. Additionally, it causes vomiting in the pigs, diarrhoea and gastroenteritis and immunosuppressive problems. In poultry farming, it reduces the growth and production and quality of the eggs and causes intestinal and liver lesions.

Contamination by mycotoxins is therefore a major problem in the agri-food industry. In addition to the production and reproductive losses of the affected animals, it entails substantial economic losses in agricultural and livestock farms. One of the main drawbacks associated with mycotoxins is the difficulty in detecting the effects associated with their presence. The main symptoms depend on the concentration of mycotoxin, the animal's species, sex, age, exposure time, environment, nutrition or state of health. In general, certain symptoms caused by small concentrations of mycotoxins can be observed, such as weight loss, decreased food intake, nonspecific diarrhoea, metabolic fat and protein problems, decreased immunology, increased number of infectious diseases or reproductive problems and miscarriages. In some cases, mycotoxins can be toxic, teratogenic, mutagenic and carcinogenic. When the concentration of mycotoxins is high, they can even cause the death of the animal. It is therefore a very serious problem in the industry, which makes it necessary to find solutions that will make it possible to reduce contamination by mycotoxins with the object of improving animal health, yield and productivity.

In general, the different alternatives that exist in the state of the art to solve the problem of mycotoxins can be classified, according to their mode of operation, into:
(a) adsorbents: This technique consists of the use of substances which act as mycotoxin anchors, preventing them from being adsorbed by the animal (Gimeno, A., Martins, M.L., 2011, "Mycotoxins and mycotoxicosis in animals and humans." SPECIAL NUTRIENTS, INC.). Boudergue, C. et al. have also described the use of an effective sequestrant which acts throughout the animal's digestive system (Boudergue, C. et al., 2009, "Review of mycotoxin-detoxifying agents used as feed additives: mode of action, efficacy and feed/food safety." Scientific report issued to the EFSA, 192 p);
(b) modifiers of the mycotoxin structure: This technique is based on the use of substances that alter the structure of the mycotoxins to reduce their toxicity. Various inventions based on said technique have been disclosed in the state of the art. Thus, for example, patent application US2011/0189755 discloses substances capable of modifying the gene expression of mycotoxins by means of enzymatic degradations. In turn, patent US6344221 discloses an invention capable of deactivating ergot alkaloids through the use of a combination of a mineral clay and modified yeast cell wall extract;
(c) lastly, products capable of improving animal immunity have also been disclosed. Thus, for example, patent application US2003/0007982 discloses a method and composition capable of improving the animal's health through the use of a modified yeast cell wall extract. Likewise, international application WO2012/002871 discloses a composition for deactivating mycotoxins through the use of an immunostimulant, among other substances.

It has been demonstrated that bentonite-, attapulgite- and zeolite-type phyllosilicates, depending on the type, origin and purity, are materials commonly used as mycotoxin sequestrants and adsorbents. It has thus been disclosed in the publication of Ramos et al., 1996, Journal of Food Protection, 59(6) pp. 631-641, in patent US5149549 or in patent US5165946.

It has also been demonstrated that common mycotoxins, such as aflatoxins, fumonisins, zearalenone, trichothecenes or ergot alkaloids can be adsorbed with varying degrees of efficacy. It has thus been disclosed, for example, in patent IL99387.

Additionally, with the aim of sequestering a wide range of mycotoxins of varying polarities, the possibility of chemically modifying the phyllosilicates or preparing simple mixtures by adding other compounds has been disclosed (Lara et al., 1998, "Aluminosilicates and mycotoxin adsorption. Current issues facing the poultry industry," 259-271. Midia Relaciones. Mexico D.F.). Among other examples, the use of quaternary ammonia salts (as in patent application MX2007008369), acids or acid compounds (US20160073662), calcined attapulgites (US5935623), hydrated sodium calcium aluminosilicates (HSCAS) (US2009/0117206), quaternary compounds (US6827959), organophyllosilicates (US20160339056), organic compounds (US2016/0287617), microspheres (US2011/0135796), humic acids (WO2011/146485), yeast walls (US6045834) and estevensites (US2008/0248155) has been proposed. However, none of these proposals describe the possibility of capturing deoxynivalenol (DON).

In this regard, patents or patent applications have been found that disclose effective products against said mycotoxin (DON), generally through the addition of compounds that accompany phyllosilicates. Thus, for example, application US2010/0330235 discloses the addition of primary amines, application AU2012200952 discloses the addition of yeast enzymes, application US 2012/0027747 discloses the addition of resins or bacterial biomass, application US2015/0150285 discloses the addition of yeasts and international application WO2010/083336 discloses the addition of yeast walls.

All the foregoing applications disclose mixtures with compounds that claim to be deoxynivalenol structure modifiers. However, none of them disclose a change in the polarity of phyllosilicates for the purpose of adsorbing deoxynivalenol (DON). Therefore, none of them demonstrate that the compounds known in the state of the art are effective in themselves as adsorbents of said mycotoxin.

Alternatively, another option would be to use activated charcoal. Activated charcoal is an inorganic compound characterised mainly by having a very porous surface area (between 50 and 2,500 square metres per gram), enabling the adsorption of a large number of mycotoxins in the digestive tract of animals, including DON. However, it has the drawback that the doses at which it has proven its efficacy cause adsorption interferences with respect to other ingredients of the traditional formulation of animal feed, such as vitamins and minerals (Avantaggiato G. et al., 2004, Food and Chemical Toxicology, 42, 817-824). Previously, the inclusion of small doses of active (or activated) charcoal was studied in intimate mixtures of different phyllosilicates (US2012/0219683), but no study has been found that demonstrates its efficacy against vomitoxin.

Therefore, due to the sequestration of compounds such as vitamins and minerals (Na, K, Ca, P, Mg, Fe, Zn and Mn) by the activated charcoal at the therapeutic doses described to date, its use as a mycotoxin adsorbent is not recommended. Furthermore, as described previously, it has not been proven that it would be an effective product against DON at the doses at which the activated charcoal would not be toxic. CN104313381 describes a hollow ball foamed aluminum material that comprises 10-15% of charcoal as a core, 30-45% of sepiolite, 35-40% of sodium bentonite and 1015% of vermiculite powder as a coating. However, the problem that this material solves is not adsorbing mycotoxins, but reducing noise due to its permeability and good noise reduction filtering performance. Jaynes et al., "Aflatoxin B1 adsorption by clays from water and corn meal", Applied Clay Sci., Elsevier, vol. 36, No. 1-3, 207, pages 197-205, is a study on the useof clay additives for reducing human aflatoxicosis. In particular, aflatoxin B1 (AfB1) adsorption by reference clays and activated carbon (AC) is compared to the adsorption by a commercial clay additive, Novasil, that lessens aflatoxicosis in animals. Jaynes et al, "Influence of Soluble Feed Proteins and Clay Additive Charge Density on Aflatoxin Binding in Ingested Feeds", Toxins, 2011, pages 551-565 is a study on the use of surface-modified clay additives prepared using low-chargesmectites and nutrient or non-toxic organic compounds to bind aflatoxins incontaminated feed or food and prevent toxicity. Thomas de Mil et al., "Characterization of 27 Mycotoxin Binders and the Relation with in Vitro Zearalenone Adsorption at a Single Concentration", TOXINS, (20150105), vol. 7, no. 1, is a study with the aim of characterizing 27 feed additives marketed as mycotoxin binders and screening them for their in vitro zearalenone (ZEN) adsorption. Shehata et al., "Adsorption of Ochratoxin A, Deoxynivalenol Zearalenone in vitro at different pH and adsorbents", 2000, pages 136-140, is an in vitro study on the adsorption of 100 pg/kg Ochratoxin A (OTA), 30 mg/kg Deoxynivalenol (DON) and 30 mg/kg Zearalenone (ZEA) from 2.5 ml phosphate buffer (pH 3.0 and pH 7.0) and pure destilled water after addition of 0.1, 0.25, 0.5, 1.0 and 2.5% (w/v) activated charcoal and four adsorbents: 1.0, 2.5 and 5.0% modified yeast cell wall+vitamin mixture+plant oil refined; modified yeast cell wall; bentonite+enzymes+modified yeast cell wall+vitamin E+trace elements and bentonite. William F., Jaynes et al., "Aflatoxin Toxicity Reduction in Feed by Enhanced Binding to Surface-Modified Clay Additives", Toxins, 2011, vol. 3, no. 12 is a study on the use of surface-modified clay additives prepared using low-charge smectites and nutrient or non-toxic organic compounds to bind aflatoxins in contaminated feed or food and prevent toxicity. S. Cavret et al., "Assessment of deoxynivalenol (DON) adsorbents and characterisation of their efficacy using complementary in vitro tests", Food Additives & Contaminants: Part A, 2010, vol. 27, no. 1 is a study on the adsorption of Deoxynivalenol (DON) by potential adsorbents: activated charcoal, cholestyramin, Saccharomyces cerevisiae mannans, algal B-glycan, fungal B-glycan and leguminous plant.

An object of the present invention is to develop a new mycotoxin adsorbent that is particularly effective against DON at doses that are non-toxic to animals. The object is to present a solution that, in addition to being a mycotoxin adsorbent with broad-spectrum efficacy, would be a cheaper technical solution than those corresponding to the current products or additives of the state of the art.

### General description of the invention

Therefore, a first object of the invention is a new compound with mycotoxin-adsorbent properties, for use in the treatment and/or prevention of mycotoxicosis caused by fumonisin, zearalenone, ochratoxin, T-2 toxin or deoxynivalenol, characterised in that it comprises a mixture of:
(a) at least one magnesium phyllosilicate in a percentage comprised between 19% and 75% by weight and more preferably between 20% and 50% by weight of the total mixture. Preferably, said magnesium phyllosilicate may consist of sepiolite;
(b) at least one aluminium phyllosilicate in a percentage comprised between 25% and 85% by weight and more preferably between 50% and 80% by weight of the total mixture. Preferably, said aluminium phyllosilicate may consist of a smectite. More preferably, said smectite may be natural sodium dioctahedral smectite; and
(c) activated vegetable charcoal in a percentage comprised between 1% and 10% by weight and more preferably between 1% and 3% by weight of the total mixture.

It has been demonstrated that the mixture of the foregoing ingredients in the described proportions has a special synergy, resulting in a surprising and unexpected effect with regard to the adsorption of mycotoxins and, particularly, vomitoxin.

Another object of the invention is the method for obtaining said compound, characterised in that it comprises intimately mixing all the components of the composition for the time required to achieve a homogeneous mixture thereof. In particular embodiments of the invention, mixing time may vary between 15 and 30 minutes.

Preferably, the mixture obtained may be subjected to a milling process (preferably dry) until obtaining a medium-sized particle preferably smaller than 0.15 mm, determined in accordance with a granulometric distribution system based on dry sieving using normalised sieves pursuant to specification ASTM E11. In this method, the sieves are chosen in accordance with the particle size of the sample to be analysed, in this case a mesh width of 0.15 mm. The analysis is performed by weighing an amount of sample. The content retained in the 0.15 mm mesh is determined by aspiration and the final content is weighed. The resulting residue of this sieving must not be greater than 5%.

Lastly, another object of the invention is the use of the claimed compound as a raw material in the formulation of compound feed, as an additive in finished mixtures intended for direct consumption by the animal or as an ingredient in the formulation of complex mycotoxin-adsorbent additives.

The claimed compound is effective in the treatment of contamination by mycotoxins such as fumonisin, zearalenone, toxin T2, ochratoxin or ON of food intended for feeding animals of different groups such as, for example, land livestock animals, pets or aquaculture species. The mode of operation is by means of mycotoxin adsorption or sequestration.

Lastly, an object of the invention is the use of the compound that is the object of the invention for treating and/or preventing poisoning caused by inhalation, direct contact or ingestion of food contaminated by mycotoxins, known as mycotoxicosis. In particular, it is particularly effective for treating and/or preventing mycotoxicosis caused by deoxynivalenol.

### Detailed description of the invention

Although the essential components of the compound that is the object of the invention have been described in the preceding section, the mixture of which has proven to be highly effective for mycotoxin adsorption, in particular embodiments of the invention the compound that is the object of the invention may comprise other components such as, for example, additives that modify their structural properties. Among other examples, buffer compounds may be used. In particular, these components may consist preferably of magnesium oxide, sodium carbonate or sodium bicarbonate, in addition to combinations thereof. Preferably, the percentage by weight of these compounds in the compound that is the object of the invention shall not exceed 5% by weight with respect to the total.

It has been proven that a particularly preferred mixture of the invention may consist of an intimate mixture of 19% by weight of sepiolite, 79% by weight of natural sodium bentonite and 2% by weight of activated vegetable charcoal. Surprisingly, this particular combination of the components of the mixture has proven to be especially effective in mycotoxin adsorption, as demonstrated below by the examples that accompany this description.

With regard to the type of presentation of the claimed compound, it has been demonstrated that there is no type of limitation in this regard and can be used both dry and wet, in the form of powder, solid granules or compact pellets, etc.

As described previously, different assays have demonstrated the great efficacy of the claimed compound in the adsorption of mycotoxins such as those listed in the preceding section and, in particular, in the natural sequestration of DON, without harming the animal.

Likewise, in comparison to other sequestrants of the state of the art, the compound that is the object of the invention offers the advantage of enabling a specific bond between the additive and the mycotoxin, said bond being irreversible. This has made it possible to achieve a bond capable of remaining stable throughout the transit of the compound through the different sections of the animal's digestive system (and, therefore, different pH levels). All this, moreover, with the additional advantage of being a highly specific compound, which prevents other types of compounds, such as vitamins or minerals, necessary for the animal, from being sequestered.

The claimed compound may therefore be used both in preventive treatments and in treatments of the side effects associated with the presence of mycotoxins.

Preferably, in the event of being used to prevent mycotoxicosis, the dose of the compound in the feed may vary between 1 kg and 2 kg per tonne of feed (i.e. in a percentage comprised between 0.1% and 0.2% by weight of the feed). In other cases, in which the object is to treat severe cases of mycotoxicosis, the dose of the compound in the feed may vary preferably between 3 kg and 4 kg of compound per tonne of feed (i.e. in a percentage comprised between 0.3% and 0.4% by weight of the feed).

In this manner, in general, the claimed compound may be used as a raw material in the formulation of feed. Preferably, the percentage of compound in the feed may vary between 0.1 and 0.4% by weight of the total feed.

In other embodiments, the claimed compound may be used as an additive in finished mixtures intended for direct consumption by the animal, in which case it may be supplied in a ratio of at least 0.5% by weight with respect to the total feed consumed in one day, both in monogastric and ruminant animals.

Lastly, in alternative embodiments of the invention, the claimed compound may be used in the formulation of complex mycotoxin-adsorbent additives. In this case, the percentage of the compound in the final formulation of the additive shall preferably exceed 1% by weight and more preferably 20% to 65% by weight of the total additive.

### Brief description of the figures

Figure 1 shows the efficacy data corresponding to the dose of 2 kg per tonne of example 1.
Figure 2 shows the efficacy data corresponding to the dose of 2 kg per tonne of example 2.
Figure 3 shows the efficacy data corresponding to the dose of 2 kg per tonne of example 3.
Figure 4 shows the efficacy data corresponding to the dose of 2 kg per tonne of example 4.
Figure 5 shows the efficacy data corresponding to the dose of 2 kg per tonne of example 5.
Figure 6 shows the efficacy data corresponding to the dose of 4 kg per tonne of example 1.
Figure 7 shows the efficacy data corresponding to the dose of 4 kg per tonne of example 2.
Figure 8 shows the efficacy data corresponding to the dose of 4 kg per tonne of example 3.
Figure 9 shows the efficacy data corresponding to the dose of 4 kg per tonne of example 4.
Figure 10 shows the efficacy data corresponding to the dose of 4 kg per tonne of example 5.
Figure 11 shows the efficacy data corresponding to example 6.
Figure 12 shows the data relative to efficacy against fumonisin corresponding to the comparative data of the present object of the invention compared to a mixture of a commercial product formed by phyllosilicates and yeast walls.
Figure 13 shows the data relative to efficacy against zearalenone corresponding to the comparative data of the present object of the invention compared to a mixture of a commercial product formed by phyllosilicates and yeast walls.
Figure 14 shows vitamin B6 recovery data at pH 2.
Figure 15 shows vitamin B6 recovery data at pH 7.

### Examples

With the object of proving the efficacy of the claimed compound, a series of adsorption assays of different low-polarity mycotoxins under in vitro conditions, simulating the digestive tract of an animal, were conducted. In this regard, due to the complexity of conducting assays with live animals and to the large number of variables that influence final performance and to the difficulty of evaluating efficacy, the general criterion is to test the efficacy of the products in vitro using one of the most accurate analytical techniques, high performance liquid chromatography (HPLC). This technique is performed by adding the sequestrant compound to be analysed to 10 ml of a buffer solution at pH 3 containing the mycotoxin concentration to be studied. Next, the solution is incubated at 37°C for 3 hours under agitation and the resulting solution containing non-sequestered mycotoxin is analysed using HPLC, said value being that corresponding to Adsorption. Next, the previous solution is discarded and, since the sequestrant is decanted at the bottom of the test tube, 10 ml of a buffer tampon at pH 6.5 is added thereto for the purpose of simulating the intestinal conditions of the animals. The solution is incubated at 37°C for 3 hours under agitation and is analysed again using HPLC in order to analyse the mycotoxin released by the sequestrant (corresponding to the Desorption value). It is important that the bond between the sequestrant and mycotoxin is maintained throughout the animal's digestive system, such that the mycotoxin is anchored to an acid pH (Adsorption) and is capable of remaining physically bonded to the sequestrant when a basic pH is reached (Desorption). The difference between Adsorption and Desorption is called Efficacy.

### Example 1

In this first example, the efficacy of a sequestrant compound in accordance with the present invention was assayed. In particular, the composition of said compound was 19% sepiolite, 79% natural sodium smectite and 2% activated vegetable charcoal. All the percentages are percentages by weight with respect to the total mixture.

This compound was subjected to an in vitro study of fumonisin adsorption efficacy at a dose of 2 kg and 4 kg per tonne of sequestrant compound. The conditions of said study consisted of a concentration of 2 ppm of mycotoxin, an adsorption pH of 3 and a desorption pH of 6.5.

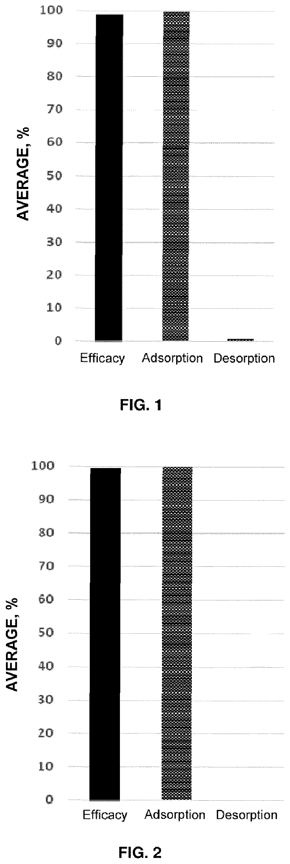

The efficacy data at a dose of sequestrant of 2 kg per tonne are represented in Figure 1. As shown in said figure, an efficacy of 98.8% was achieved, with an adsorption of 99.5% and desorption of 0.7%.

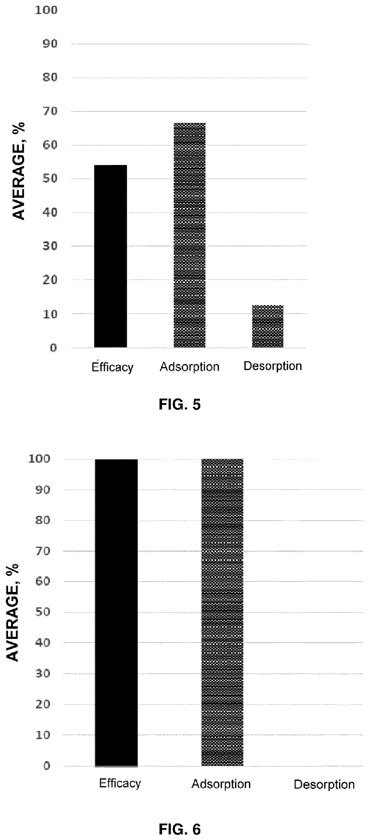

The efficacy data at a dose of sequestrant of 4 kg per tonne are represented in Figure 6. In this case, an efficacy of 99.9% was achieved, with an adsorption of 99% and desorption of 0.1%.

### Example 2

In this case, the efficacy of a compound with the same composition as that described in example 1 (consisting of 19% sepiolite, 79% natural sodium smectite and 2% activated vegetable charcoal) was assayed. This compound was subjected to an in vitro study of zearalenone adsorption efficacy at a dose of 2 kg and 4 kg per tonne of sequestrant compound. The conditions of said study were the same, consisting of 2 ppm of mycotoxin, an adsorption pH of 3 and a desorption pH of 6.5.

The efficacy data at a dose of sequestrant of 2 kg per tonne are represented in Figure 2. As shown in said figure, an efficacy of 99.4% was achieved, with an adsorption of 99.7% and desorption of 0.3%.

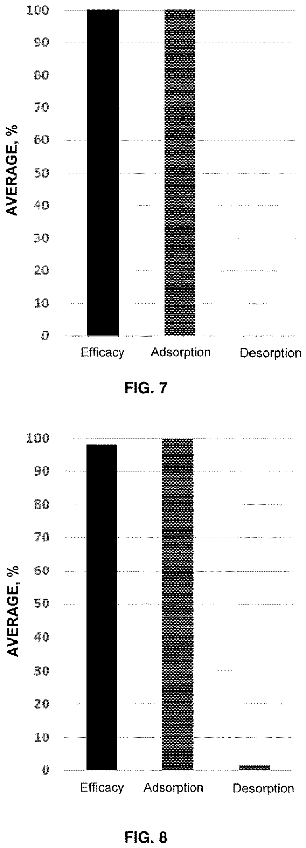

The efficacy data at a dose of sequestrant of 4 kg per tonne are represented in Figure 7. In this case, an efficacy of 100% was achieved, with an adsorption of 100% and desorption of 0%.

### Example 3

In this case the efficacy of a compound with the same composition as that described in example 1 (consisting of 19% sepiolite, 79% natural sodium smectite and 2% activated vegetable charcoal) was assayed. This compound was subjected to an in vitro study of ochratoxin adsorption efficacy at a dose of 2 kg and 4 kg per tonne of sequestrant compound. The conditions of said study were the same, consisting of 2 ppm of mycotoxin, an adsorption pH of 3 and a desorption pH of 6.5.

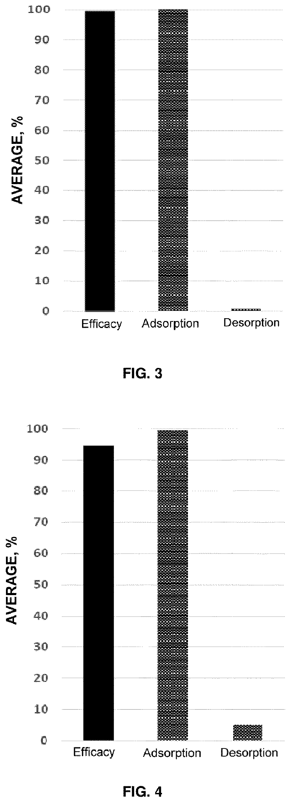

The efficacy data at a dose of sequestrant of 2 kg per tonne are represented in Figure 3. As shown in said figure, an efficacy of 99.3% was achieved, with an adsorption of 100% and desorption of 0.7%.

The efficacy data at a dose of sequestrant of 4 kg per tonne are represented in Figure 8. In this case, an efficacy of 98.1% was achieved, with an adsorption of 99.6% and desorption of 1.5%.

### Example 4

In this case, the efficacy of a compound with the same composition as that described in example 1 (consisting of 19% sepiolite, 79% natural sodium smectite and 2% activated vegetable charcoal) was assayed. This compound was subjected to an in vitro study of toxin T2 adsorption efficacy at a dose of 2 kg and 4 kg per tonne of sequestrant compound. The conditions of said study were the same, consisting of 2 ppm of mycotoxin, an adsorption pH of 3 and a desorption pH of 6.5.

The efficacy data at a dose of sequestrant of 2 kg per tonne are represented in Figure 4. As shown in said figure, an efficacy of 94.4% was achieved, with an adsorption of 99.6% and desorption of 5.1%.

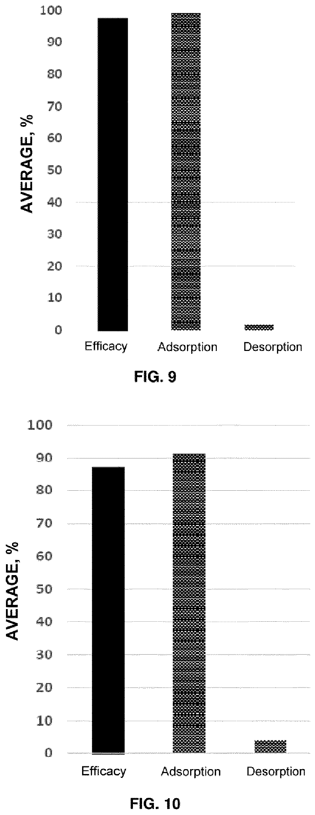

The efficacy data at a dose of sequestrant of 4 kg per tonne are represented in Figure 9. In this case, an efficacy of 97.4% was achieved, with an adsorption of 99.1% and desorption of 1.7%.

### Example 5

In this case, the efficacy of a compound with the same composition as that described in example 1 (consisting of 19% sepiolite, 79% natural sodium smectite and 2% activated vegetable charcoal) was assayed. This compound was subjected to an in vitro study of deoxynivalenol adsorption efficacy at a dose of 2 kg and 4 kg per tonne of sequestrant compound. The conditions of said study were the same, consisting of 2 ppm of mycotoxin, an adsorption pH of 3 and a desorption pH of 6.5.

The efficacy data at a dose of sequestrant of 2 kg per tonne are represented in Figure 5. As shown in said figure, an efficacy of 54% was achieved, with an adsorption of 66.5% and desorption of 12.5%.

The efficacy data at a dose of sequestrant of 4 kg per tonne are represented in Figure 9. In this case, an efficacy of 87.2% was achieved, with an adsorption of 91% and desorption of 3.8%.

### Example 6 (Comparative)

In this case, the efficacy of a compound with the same composition as that described in example 1 (consisting of 19% sepiolite, 79% natural sodium smectite and 2% activated vegetable charcoal) was assayed. This compound was subjected to an in vitro study of aflatoxin B1 adsorption efficacy at a dose of 0.2 kg per tonne of sequestrant compound. The conditions of said study were the same, consisting of 4 ppm of mycotoxin and an adsorption pH of 5.

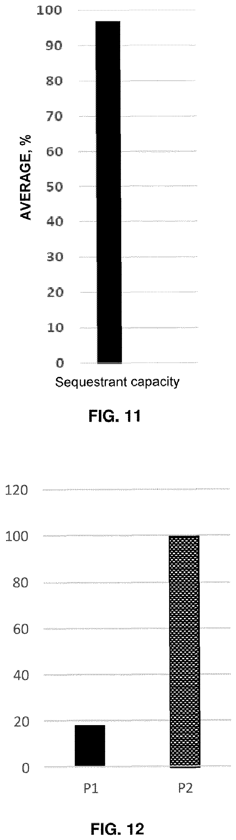

The efficacy data at the dose of sequestrant represented in Figure 11 were 96.8%.

The foregoing examples therefore make it possible to demonstrate the great efficacy of the claimed compound in the sequestration of certain mycotoxins, which proves its utility in the prevention and/or treatment of intoxications caused by these types of compounds.

### Example 7

In this case, the efficacy of a compound with the same composition as that described in example 1 (consisting of 19% sepiolite, 79% natural sodium smectite and 2% activated vegetable charcoal), represented in Figure 12 as P2, was assayed. This compound was subjected to an in vitro study of fumonisin adsorption efficacy at a dose of 4 kg per tonne of sequestrant compound.

Next, a comparative study was conducted on a commercially available mycotoxin sequestrant compound composed of phyllosilicates and yeast walls, represented in Figure 12 as P1. The conditions of said study were the same, consisting of 2 ppm of mycotoxin, an adsorption pH of 3 and a desorption pH of 6.5.

The assay made it possible to demonstrate the great efficacy of the compound that is the object of the invention compared to a commercially available sequestrant. In particular, as shown in Figure 12, the efficacy achieved with the compound that is the object of the invention was 99.9%, compared to 17.8% obtained with the commercially available sequestrant.

### Example 8

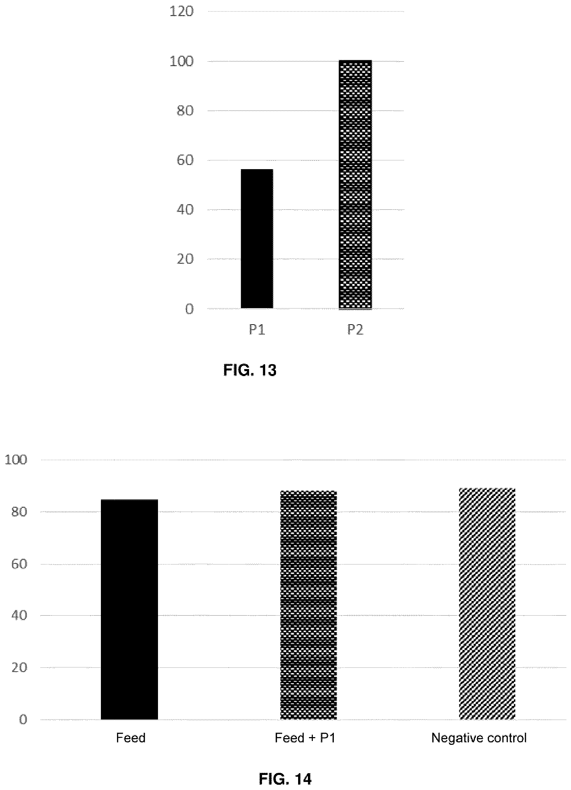

In this case, the efficacy of a compound with the same composition as that described in example 1 (consisting of 19% sepiolite, 79% natural sodium smectite and 2% activated vegetable charcoal), represented in Figure 13 as P2, was assayed. This compound was subjected to an in vitro study of zearalenone adsorption efficacy at a dose of 4 kg per tonne of sequestrant compound.

Next, a comparative study was conducted on a commercially available mycotoxin sequestrant compound composed of phyllosilicates and yeasts, represented in Figure 13 as P1. The conditions of said study were 2 ppm of mycotoxin, an adsorption pH of 3 and a desorption pH of 6.5.

Once again, the assay made it possible to demonstrate the great efficacy of the compound that is the object of the invention compared to a commercially available sequestrant. In particular, as shown in Figure 13, the efficacy achieved with the compound that is the object of the invention was 100%, compared to 56.3% obtained with the commercially available sequestrant.

### Example 9 (Comparative)

In this case, the sequestration security of vitamin B6 of a compound with the same composition as that described in example 1 (consisting of 19% sepiolite, 79% natural sodium smectite and 2% activated vegetable charcoal), was assayed.

This compound was subjected to an in vitro study of vitamin B6 sequestration security. In particular, three assays were conducted, the first using feed not including the compound that is the object of the invention, the second using feed including said compound and the third as a negative control, using only vitamin B6. The conditions of the three assays were identical, conducted at pH 2.

As can be observed in Figure 14, the vitamin B6 recovery data were 84.5%, 88% and 89%, respectively. Therefore, this shows the high specificity of the compound that is the object of the invention, which is highly advantageous when used as an additive or component of the feed intended for animal nutrition.

### Example 10 (Comparative)

In this case, the sequestration security of vitamin B6 of a compound with the same composition as that described in example 1 (consisting of 19% sepiolite, 79% natural sodium smectite and 2% activated vegetable charcoal), was assayed.

This compound was subjected to an in vitro study of vitamin B6 sequestration security. In particular, three assays were conducted, the first using feed not including the compound that is the object of the invention, the second using feed including said compound and the third as a negative control, using only vitamin B6. The conditions of the three assays were identical, conducted at pH 7.

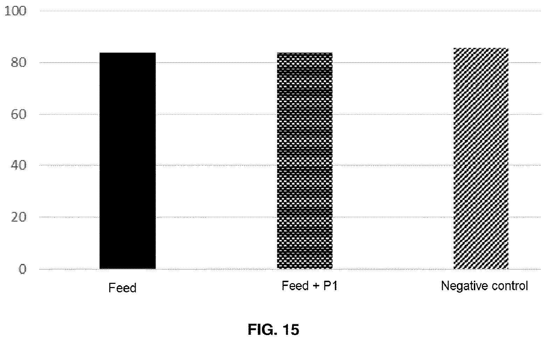

As can be observed in Figure 15, the vitamin B6 recovery data were 83.7%, 83.6% and 85.7%, respectively. Therefore, this demonstrates the high specificity of the compound that is the object of the invention, which is highly advantageous when used as an additive or component of the feed intended for animal nutrition.

## Claims

1. A compound with mycotoxin-adsorbent properties, for use in the treatment and/or prevention of mycotoxicosis caused by fumonisin, zearalenone, ochratoxin, T-2 toxin or deoxynivalenol, **characterised in that** it comprises a mixture of:
(a) at least one magnesium phyllosilicate in a percentage comprised between 19% and 75% by weight of the total mixture;
(b) at least one aluminium phyllosilicate in a percentage comprised between 25% and 85% by weight of the total mixture; and
(c) activated vegetable charcoal in a percentage comprised between 1% and 10% by weight of the total mixture.

2. The compound, for use according to claim 1, wherein the magnesium phyllosilicate is comprised between 20% and 50% by weight of the total mixture.

3. The compound, for use according to claim 1 or 2, wherein the aluminium phyllosilicate is comprised between 50% and 80% by weight of the total mixture.

4. The compound, for use according to any one of the preceding claims, wherein the magnesium phyllosilicate is sepiolite.

5. The compound, for use according to any one of the preceding claims, wherein the aluminium phyllosilicate is selected from among the group of smectites.

6. The compound, for use according to claim 5, wherein the smectite is natural sodium dioctahedral smectite.

7. The compound, for use according to claim 1, **characterised in that** it consists of a mixture of 19% by weight of sepiolite, 79% by weight of natural sodium bentonite and 2% by weight of activated vegetable charcoal.

8. A metho for obtaining a compound, according to any one of claims 1 to 7, **characterised in that** it comprises mixing:
(a) at least one magnesium phyllosilicate in a percentage comprised Amended claims- EP 17382479.8 between 19% and 75% by weight of the total mixture;
(b) at least one aluminium phyllosilicate in a percentage comprised between 25% and 85% by weight of the total mixture; and
(c) activated vegetable charcoal in a percentage comprised between 1% and 10% by weight of the total mixture.

9. The method, according to claim 8, **characterised in that** it comprises an additional milling stage until obtaining an average particle size smaller than 0.15 mm.

10. A use of the compound, according to any of one of claims 1 to 7, as a raw material in the formulation of compound feed.

11. The use of the compound, as described in claim 10, wherein the percentage of the compound in the feed is comprised between 0.1% and 0.4% by weight of the total feed.

12. The use of the compound, according to the use of any one of claims 1 to 7, as an additive in mixtures for animal nutrition.

13. The use of the compound, according to the use of any one of claims 1 to 7, as an ingredient in the formulation of complex mycotoxin-adsorbent additives.

14. The use of the compound, according to the use of any one of claims 1 to 7, as an adsorbent of at least one mycotoxin selected from among a group consisting of fumonisin, zearalenone, toxin T2, ochratoxin and deoxynivalenol.

## Patentansprüche

1. Verbindung mit Mykotoxin-adsorbierenden Eigenschaften zur Verwendung bei der Behandlung und/oder Prävention von Mykotoxikose, die durch Fumonisin, Zearalenon, Ochratoxin, T-2-Toxin oder Deoxynivalenol verursacht wird, **dadurch gekennzeichnet, dass** sie ein Gemisch aus
(a) mindestens einem Magnesium-Phyllosilikat in einem Prozentsatz, der zwischen 19 und 75 Gewichtsprozent des Gesamtgemisches umfasst,
(b) mindestens einem Aluminium-Phyllosilikat in einem Prozentsatz, der zwischen 25 und 85 Gewichtsprozent des Gesamtgemisches umfasst, und
(c) pflanzliche Aktivkohle in einem Prozentsatz, der zwischen 1 und 10 Gewichtsprozent des Gesamtgemisches umfasst,
umfasst.

2. Verbindung zur Verwendung gemäß Anspruch 1, wobei das Magnesium-Phyllosilikat zwischen 20 und 50 Gewichtsprozent des Gesamtgemisches umfasst.

3. Verbindung zur Verwendung gemäß Anspruch 1 oder 2, wobei das Aluminium-Phyllosilikat zwischen 50 und 80 Gewichtsprozent des Gesamtgemisches umfasst.

4. Verbindung zur Verwendung gemäß einem der vorstehenden Ansprüche, wobei das Magnesium-Phyllosilikat Sepiolith ist.

5. Verbindung zur Verwendung gemäß einem der vorhergehenden Ansprüche, wobei das Aluminiumschichtsilikat aus der Gruppe der Smektite ausgewählt ist.

6. Verbindung zur Verwendung gemäß Anspruch 5, wobei der Smektit natürlicher Natrium-Dioktaeder-Smektit ist.

7. Verbindung zur Verwendung gemäß Anspruch 1, **dadurch gekennzeichnet, dass** sie aus einem Gemisch von 19 Gewichtsprozent Sepiolith, 79 Gewichtsprozent natürlichem Natriumbentonit und 2 Gewichtsprozent pflanzlicher Aktivkohle besteht.

8. Verfahren zum Gewinnen einer Verbindung gemäß einem der Ansprüche 1 bis 7, **dadurch gekennzeichnet, dass** es das Mischen von:
(a) mindestens einem Magnesium-Phyllosilikat in einem Prozentsatz, der zwischen 19 und 75 Gewichtsprozent des Gesamtgemisches umfasst,
(b) mindestens einem Aluminium-Phyllosilikat in einem Prozentsatz, der zwischen 25 und 85 Gewichtsprozent des Gesamtgemisches umfasst, und
(c) pflanzliche Aktivkohle in einem Prozentsatz, der zwischen 1 und 10 Gewichtsprozent des Gesamtgemisches umfasst,
umfasst.

9. Verfahren gemäß Anspruch 8, **dadurch gekennzeichnet, dass** es einen zusätzlichen Mahlschritt umfasst, bis man eine mittlere Teilchengröße von weniger als 0,15 mm erhält.

10. Verwendung der Verbindung gemäß einem der Ansprüche 1 bis 7 als Rohstoff bei der Formulierung von Mischfuttermitteln.

11. Verwendung der Verbindung wie in Anspruch 10 beschrieben, wobei der Prozentsatz der Verbindung im Futtermittel zwischen 0,1 und 0,4 Gewichtsprozent des Gesamtfutters umfasst.

12. Verwendung der Verbindung gemäß der Verwendung eines der Ansprüche 1 bis 7 als Zusatzstoff in Mischungen für die Tierernährung.

13. Verwendung der Verbindung gemäß der Verwendung eines der Ansprüche 1 bis 7 als Bestandteil in der Formulierung von komplexen Mykotoxin-adsorbierenden Additiven.

14. Verwendung der Verbindung gemäß der Verwendung eines der Ansprüche 1 bis 7 als Adsorptionsmittel für mindestens ein Mykotoxin, ausgewählt aus der Gruppe bestehend aus Fumonisin, Zearalenon, T2-Toxin, Ochratoxin und Deoxynivalenol.

## Revendications

1. Composé ayant des propriétés d'absorption de mycotoxines, pour une utilisation dans le traitement et/ou la prévention d'une mycotoxicose causée par la fumonisine, la zéaralénone, l'ochratoxine, la toxine T-2 ou le désoxynivalénol, **caractérisé en ce qu'**il comprend un mélange de :
(a) au moins un phyllosilicate de magnésium en un pourcentage compris entre 19 % et 75 % en poids du mélange total ;
(b) au moins un phyllosilicate d'aluminium en un pourcentage compris entre 25 % et 85 % en poids du mélange total ; et
(c) du charbon végétal activé en un pourcentage compris entre 1 % et 10 % en poids du mélange total.

2. Composé, pour une utilisation selon la revendication 1, dans lequel le phyllosilicate de magnésium est compris entre 20 % et 50 % en poids du mélange total.

3. Composé, pour une utilisation selon la revendication 1 ou 2, dans lequel le phyllosilicate d'aluminium est compris entre 50 % et 80 % en poids du mélange total.

4. Composé, pour une utilisation selon l'une quelconque des revendications précédentes, dans lequel le phyllosilicate de magnésium est la sépiolite.

5. Composé, pour une utilisation selon l'une quelconque des revendications précédentes, dans lequel le phyllosilicate d'aluminium est choisi dans le groupe des smectites.

6. Composé, pour une utilisation selon la revendication 5, dans lequel la smectite est une smectite dioctaédrique sodique naturelle.

7. Composé, pour une utilisation selon la revendication 1, **caractérisé en ce qu'**il se compose d'un mélange de 19 % en poids de sépiolite, 79 % en poids de bentonite sodique naturelle et 2 % en poids de charbon végétal activé.

8. Procédé d'obtention d'un composé, selon l'une quelconque des revendications 1 à 7, **caractérisé en ce qu'**il comprend le mélange de :
(a) au moins un phyllosilicate de magnésium en un pourcentage compris entre 19 % et 75 % en poids du mélange total ;
(b) au moins un phyllosilicate d'aluminium en un pourcentage compris entre 25 % et 85 % en poids du mélange total ; et
(c) du charbon végétal activé en un pourcentage compris entre 1 % et 10 % en poids du mélange total.

9. Procédé, selon la revendication 8, **caractérisé en ce qu'**il comprend une étape de broyage supplémentaire jusqu'à l'obtention d'une taille de particule moyenne inférieure à 0,15 mm.

10. Utilisation du composé, selon l'une quelconque des revendications 1 à 7, en tant que matière première dans la formulation d'alimentation de composé.

11. Utilisation du composé, telle que décrite dans la revendication 10, dans laquelle le pourcentage du composé dans l'alimentation est compris entre 0,1 % et 0,4 % en poids de l'alimentation totale.

12. Utilisation du composé, selon l'utilisation de l'une quelconque des revendications 1 à 7, en tant qu'additif dans des mélanges pour une alimentation animale.

13. Utilisation du composé, selon l'utilisation de l'une quelconque des revendications 1 à 7, en tant qu'ingrédient dans la formulation d'additifs d'absorption de mycotoxines complexes.

14. Utilisation du composé, selon l'utilisation de l'une quelconque des revendications 1 à 7, en tant qu'absorbant d'au moins une mycotoxine choisie dans le groupe constitué par la fumonisine, la zéaralénone, l'ochratoxine, la toxine T-2 et le désoxynivalénol.
